# EUROPÄISCHE PATENTSCHRIFT

(11) **EP 3 184 758 B1**
(45) Veröffentlichungstag und Bekanntmachung des Hinweises auf die Patenterteilung: **07.02.2018**
(21) Anmeldenummer: 15201709.1
(22) Anmeldetag: 21.12.2015
(51) Int. Cl.: F01K 25/08

(54) **BLOCKHEIZKRAFTWERK UND VERFAHREN ZUM BETREIBEN EINES BLOCKHEIZKRAFTWERKS**
COMBINED HEAT AND POWER PLANT AND METHOD FOR OPERATING SAME
INSTALLATION DE COGENERATION ET PROCEDE DE FONCTIONNEMENT D'UNE INSTALLATION DE COGENERATION

(43) Veröffentlichungstag der Anmeldung: 28.06.2017
(73) Patentinhaber: Fuelsave GmbH, 69190 Walldorf (DE)
(72) Erfinder: Hoffmann, Dirk, 21244 Buchholz i.d.N. (DE)
(74) Vertreter: Ridderbusch, Oliver

(56) Entgegenhaltungen:
- WO-A2-2010/081469
- WO-A2-2012/140172
- DE-A1- 4 439 063
- DE-A1-102007 019 958
- GB-A- 576 603
- GB-A- 2 486 787
- US-A- 5 032 068

## Beschreibung

Die vorliegende Erfindung bezieht sich in einem ersten Aspekt auf ein Blockheizkraftwerk, im Folgenden auch BHKW, nach dem Oberbegriff des Anspruchs 1.

In einem zweiten Gesichtspunkt betrifft die Erfindung ein Verfahren zum Betreiben eines Blockheizkraftwerks nach dem Oberbegriff des Anspruchs 13.

Ein gattungsgemäßes Blockheizkraftwerk weist einen Brennraum zum Verbrennen eines Energieträgers auf. Der Energieträger kann grundsätzlich beliebiger Art sein. Beispielsweise kann es sich um fossile Energieträger handeln, wie Kohle, Öl, Benzin oder Diesel, oder auch Holz oder biologische (Abfall-)Produkte. Der Brennraum kann Entzündungsmittel umfassen und prinzipiell eine beliebige Form aufweisen und durch beliebig viele Räume oder Abschnitte gebildet sein. Durch die Verbrennung wird Wärmeenergie freigesetzt, welche im Blockheizkraftwerk weiter genutzt wird. So sind Stromerzeugungsmittel vorhanden zum Gewinnen von elektrischer Energie aus Wärmeenergie, welche durch Verbrennen des Energieträgers freigesetzt wird. Die Stromerzeugungsmittel können in prinzipiell bekannter Weise gebildet sein und können beispielsweise eine Turbine und einen Generator umfassen.

Ein gattungsgemäßes Blockheizkraftwerk umfasst weiterhin ein Abwärmenutzungssystem, welches eingerichtet ist zum Umwandeln von Abwärme in elektrische Energie. Die Abwärme kann insbesondere die Wärmeenergie eines Fluids sein, welches die Stromerzeugungsmittel (etwa eine Turbine) antreibt. Somit kann zumindest ein Teil der Wärmeenergie, welche nicht durch die Stromerzeugungsmittel in elektrische Energie umgewandelt wird, mit Hilfe des Abwärmenutzungssystems doch noch in elektrische Energie gewandelt werden. Nur ein Teil der Abwärme wird schließlich zum Heizen von beispielsweise Gebäuden oder zum Bereitstellen von Warmwasser vom Blockheizkraftwerk abgegeben. Das Abwärmenutzungssystem umfasst zumindest einen Drehkolbenmotor und einen Generator, wobei der Drehkolbenmotor mit Hilfe der Abwärme antreibbar ist und mit dem Generator gekoppelt ist, um bei Rotation des Drehkolbenmotors mit dem Generator elektrische Energie zu erzeugen.

Unter einem Fluid kann ein Gas und/oder eine Flüssigkeit verstanden werden. Je nach Position in beispielsweise dem Abwärmenutzungssystem kann das Fluid auch abwechselnd als Gas oder als Flüssigkeit vorliegen.

Bei einem gattungsgemäßen Verfahren zum Betreiben eines Blockheizkraftwerks ist vorgesehen, dass ein Energieträger in einem Brennraum verbrannt wird. Aus Wärmeenergie, welche durch Verbrennen des Energieträgers freigesetzt wird, wird mit Stromerzeugungsmitteln elektrische Energie gewonnen. Mit einem Abwärmenutzungssystem wird Abwärme in elektrische Energie umgewandelt, wobei das Abwärmenutzungssystem zumindest einen Drehkolbenmotor und einen Generator umfasst. Der Drehkolbenmotor wird mit Hilfe der Abwärme angetrieben und ist mit dem Generator gekoppelt, womit bei Rotation des Drehkolbenmotors mit dem Generator elektrische Energie erzeugt wird.

Eine Problematik bei derartigen Blockheizkraftwerken ergibt sich daraus, dass ein Wärmeträger, beispielsweise ein Fluid, dessen Wärmeenergie (Abwärme) mit dem Abwärmenutzungssystem genutzt werden soll, eine eher geringe Temperatur hat. Um dennoch bedeutsame Mengen elektrischer Energie erzeugen zu können, sind die Anforderungen an das Abwärmenutzungssystem hoch. Dieses sollte einen möglichst hohen Wirkungsgrad bei Wärmeträgern mit verhältnismäßig niedriger Temperatur und/oder niedrigem Druck erreichen.

Nachteilig an bekannten Abwärmenutzungssystemen kann zudem sein, dass die verwendeten Drehkolbenmotoren oft auf ein verhältnismäßig enges Intervall des Arbeitsdrucks des Fluids, welches hier in der Regel als Gas vorliegt, ausgelegt sind und in der Regel bei niedrigem Arbeitsdruck einen mäßigen Wirkungsgrad aufweisen.

Blockheizkraftwerke der vorgenannten Art, bei denen ein Abwärmenutzungssystem vorgesehen ist, sind beispielsweise bekannt aus DE 10 2005 048 795 B3, DE 20 2011 101 243 U1 und WO 2011/026635 A2.

Drehkolbenmotoren, durch welche ein Fluid, insbesondere Abgas, geleitet wird, um so den Drehkolbenmotor anzutreiben und schließlich elektrische Energie zu erzeugen, sind beschrieben in DE 10 2007 019 958 A1, DE 44 39 063 A1, GB 576 603 und WO 2012/140172 A1.

Als eine **Aufgabe** der Erfindung kann angesehen werden, ein Blockheizkraftwerk und ein Verfahren zum Betreiben eines Blockheizkraftwerks anzugeben, wobei das Abwärmenutzungssystem des Blockheizkraftwerks auch bei niedrigen Drucken und Temperaturen einen möglichst hohen Wirkungsgrad bietet.

Diese Aufgabe wird durch das Blockheizkraftwerk mit den Merkmalen des Anspruchs 1 und durch das das Verfahren mit den Merkmalen des Anspruchs 13 gelöst.

Vorteilhafte Varianten des erfindungsgemäßen Blockheizkraftwerks und des erfindungsgemäßen Verfahrens sind Gegenstand der abhängigen Ansprüche und werden außerdem in der folgenden Beschreibung erläutert.

Bei dem Blockheizkraftwerk der oben genannten Art ist erfindungsgemäß vorgesehen, dass der Drehkolbenmotor ein Gehäuse aufweist, welches einen Innenraum bildet, in dem mindestens zwei Drehkolben so angeordnet sind, dass sie gemeinsam rotieren, wenn der Innenraum von einem Fluid durchströmt wird. Das Abwärmenutzungssystem kann so gestaltet sein, dass das Fluid als Gas durch den Drehkolbenmotor strömt. In dem Abwärmenutztungssystem führt die Abwärme zu einer Erhöhung des Drucks des Fluids, womit der Drehkolbenmotor angetrieben wird.

Gegenüber einem Drehkolbenmotor mit einem einzigen Drehkolben kann durch die erfindungsgemäße Gestaltung ein höherer Anteil der im Fluiddruck/Gasdruck vorliegenden Energie genutzt und in elektrische Energie umgewandelt werden.

In entsprechender Weise ist bei dem Verfahren der oben genannten Art erfindungsgemäß vorgesehen, dass der Drehkolbenmotor ein Gehäuse aufweist, welches einen Innenraum bildet, in dem mindestens zwei Drehkolben so angeordnet sind, dass sie gemeinsam rotieren, wenn der Innenraum von einem Fluid durchströmt wird.

Grundsätzlich können Fluidleitungen so gestaltet sein, dass das Fluid den Drehkolbenmotor einmalig durchströmt und sodann von dem BHKW weggeleitet wird, beispielsweise für Heizzwecke.

Alternativ kann das Abwärmenutzungssystem einen Kreisprozess umfassen, insbesondere einen Organischen Rankine-Kreisprozess (ORC, englisch: Organic Rankine Cycle). Der Kreisprozess umfasst ein Leitungssystem zum Zirkulieren des Fluids und einen im Leitungssystem angeordneten Wärmetauscher zum Übertragen der Abwärme auf das Fluid. Der Drehkolbenmotor ist ebenfalls im Leitungssystem angeordnet, um vom Fluid durchströmt zu werden. Wenn das Fluid in einem geschlossenen Leitungssystem zirkuliert, kann ein für geringe Temperaturen und Drucken geeignetes Fluid, insbesondere ein organisches Fluid, verwendet werden. Dadurch kann der Wirkungsgrad bei niedriger Temperatur des Fluids erhöht werden. Je nach Gestaltung des Kreisprozesses umfasst dieser weitere Komponenten. So kann ein Verdampfer vorgesehen sein oder der Wärmetauscher als Verdampfer gestaltet sein, um das Fluid durch die Abwärme zu verdampfen. Stromabwärts vom Drehkolbenmotor kann ein Kondensator angeordnet sein, um einen Phasenübergang des Fluids von gasförmig zu flüssig zu bewirken. Ein Vorwärmer, welcher ein weiterer Wärmetauscher ist, kann im Leitungssstem angeordnet sein, um dem Fluid bereits Abwärme zuzuführen, bevor es im Wärmetauscher / Verdampfer verdampft wird. Eine Speisepumpe ist im Leitungssystem vorzugsweise stromabwärts vom Kondensator und vorzugsweise stromaufwärts zum Vorwärmer angeordnet.

Die Stromerzeugungsmittel können wie eingangs beschrieben gestaltet sein. Zum Erzeugen elektrischer Energie können sie einen Generator umfassen, bei welchem es sich vorzugsweise gerade um denselben Generator handelt, mit dem der Drehkolbenmotor gekoppelt ist. Eine Verbrennungsmaschine der Stromerzeugungsmittel und der Drehkolbenmotor des Abwärmenutzungssystems können also mit demselben Generator gekoppelt sein.

Die Gestaltung des Drehkolbenmotors ist von hoher Bedeutung für eine effiziente Energieumwandlung bei niedriger Temperatur oder Druck des Fluids.

Jeder Drehkolben weist an seinem Außenumfang mindestens zwei Dichtleisten und mindestens zwei Vertiefungen auf. Die Formen der Vertiefungen und der Dichtleisten sind gewählt zum dichtenden Eingreifen der Dichtleisten von jeweils einem der Drehkolben in die Vertiefungen des jeweils anderen Drehkolbens. Zudem sind die Dichtleisten in Radialrichtung zum dichtenden Kontaktieren einer Gehäuseinnenwand bemessen.

Die Radialrichtung bezieht sich dabei auf den Radius des zugehörigen Drehkolbens, womit die Radialrichtung quer oder senkrecht zur Rotationsrichtung des jeweiligen Drehkolbens steht.

Das Gehäuse umfasst eine Eintrittsöffnung zum Einleiten des Fluids in den Innenraum und eine Austrittsöffnung für das Fluid, welche sich am Innenraum an einer der Eintrittsöffnung gegenüberliegenden Seite befindet, das heißt die beiden Drehkolben sind zwischen der Eintritts- und Austrittsöffnung angeordnet.

Das von der Eintrittsöffnung kommende Fluid drückt gegen (zumindest) einige der Dichtleisten, wodurch diese Dichtleisten gegen die Gehäuseinnenwand gedrückt werden. Insbesondere kann je nach Drehstellung mindestens eine (oder genau eine) der Dichtleisten von jedem Drehkolben dem einströmenden Fluid ausgesetzt sein und somit durch dieses gegen die Gehäuseinnenwand gedrückt werden.

Die Dichtleisten sind an die Drehkolben ein- oder angesetzt. Ein Fluiddruck kann auf die Dichtleisten wirken und diese gegen die Gehäuseinnenwand drücken, womit eine besonders gute Dichtung erzeugt wird. Somit führt der Fluiddruck zu einer gewissen Verformung der Dichtleisten, welche für eine effiziente Dichtung bedeutsam ist.

Eine solche Verformung wäre nicht oder kaum möglich, wenn der gesamte Außenumfang eines Drehkolbens starr, insbesondere aus demselben Material, gebildet wäre.

Der dichtende Fluiddruck kann bereits bei einem verhältnismäßig geringen Druck erreicht werden. Auch spielt die Viskosität des Arbeitsfluids nur eine geringe Rolle. Daher kann der Drehkolbenmotor der Erfindung für zahlreiche verschiedene Arbeitsfluide und unter sehr unterschiedlichen Drücken eingesetzt werden. Als weiterer Vorteil sind Schmiermittel oder -öle bei dem Drehkolbenmotor abhängig vom verwendeten Fluid nicht erforderlich.

Eine besonders gute Dichtung wird erreicht, indem die Dichtleisten ein verformbares oder elastisches Material umfassen, so dass sie durch das Fluid dichtend gegen die Gehäuseinnenwand drückbar / verformbar sind. Das Material der Dichtleisten ist leichter verformbar oder elastischer als ein die Dichtleisten umgebendes Material des Drehkolbens, insbesondere als das Material, aus dem die später näher beschriebenen Nuten zum Aufnehmen der Dichtleisten gebildet sind.

Das verwendete Fluid kann grundsätzlich eine beliebige Flüssigkeit oder ein beliebiges Gas sein. Dieses wird über die Eintrittsöffnung in den Innenraum des Drehkolbenmotors geleitet. Beim Durchströmen des Innenraums in Richtung der Austrittsöffnung dreht es die beiden Drehkolben. Die Drehkolben sind so dimensioniert und im Innenraum angeordnet, dass das Fluid von der Eintrittsöffnung zur Austrittsöffnung nur gelangen kann, wenn dabei die Drehkolben rotiert werden. Mit anderen Worten bewirken die beiden Drehkolben bei Stillstand eine Dichtung, so dass ohne Rotation kein Fluid den Innenraum durchströmen kann. Für diese Dichtung ist einerseits ein Kontakt der beiden Drehkolben nötig. Durch diesen Kontakt kann wenig oder kein Fluid zwischen den beiden Drehkolben hindurch gelangen. Andererseits wird für die Dichtung auch ein Kontakt der beiden Drehkolben zu der Gehäuseinnenwand benötigt. Dieser Kontakt besteht zumindest an einer nach außen gewandten Seite des jeweiligen Drehkolbens, welche dem Kontaktbereich zwischen den Drehkolben abgewandt ist. Beispielsweise kann jeder Drehkolben mittels seiner Dichtleisten einen dichtenden Kontakt zur benachbarten Gehäuseinnenwand über einen Winkelbereich von mindestens 150°, bevorzugt mindestens 180° und besonders bevorzugt mehr als 180° bereitstellen.

Die Dichtleisten können sich in eine Longitudinalrichtung erstrecken, welche im Wesentlichen parallel zu den Rotationsachsen der beiden Drehkolben steht. Insbesondere kann ein Winkel zwischen der Longitudinalrichtung und den Rotationsachsen kleiner als 20°, vorzugsweise kleiner als 10°, sein.

Die beiden Rotationsachsen der zwei Drehkolben können ebenfalls parallel zueinander stehen oder zumindest in einem Winkel, der höchstens 40° oder vorzugsweise höchstens 20° beträgt. Zudem können die beiden Drehkolben identisch gebildet sein. Werden asymmetrische Dichtleisten verwendet, wie später beschrieben, so können die Drehkolben bis auf eine gespiegelte Anordnung oder Formung der Dichtleisten identisch sein.

Unter einem Drehkolben kann ein Gegenstand verstanden werden, welcher drehbar gelagert ist und bei Drehung eine Welle mitdreht. Die Drehung dieser Welle kann sodann verwendet werden, um beispielsweise andere Objekte in Rotation zu versetzten oder über insbesondere den Generator elektrische Energie zu erzeugen.

Zur Befestigung der Dichtleisten an den Drehkolben können die Dichtleisten in Nuten, also Rillen oder ähnlichen Vertiefungen, aufgenommen sein, welche am jeweiligen Außenumfang der Drehkolben geformt sind. Insbesondere können die Nuten in später näher beschriebenen Zahnkränzen der Drehkolben gebildet sein. In den Nuten können die Dichtleisten in prinzipiell beliebiger Weise befestigt sein. Die Dichtleisten können somit austauschbar sein, womit bei einem Abrieb aufgrund des dichtenden Kontakts ein leichter Wechsel der Dichtleisten möglich ist, ohne dass weitere Komponenten des Drehkolbenmotors ausgetauscht werden müssten.

Bei einer bevorzugten Gestaltung sind die Dichtleisten als Nutensteine gebildet zum haltenden Eingreifen in die Nuten in den Drehkolben. Darunter ist zu verstehen, dass die Dichtleisten an ihrem jeweiligen inneren Ende, welches in den zugehörigen Drehkolben aufgenommen ist, eine Verdickung oder einen Kragen aufweisen. Die Nuten, in welchen die Dichtleisten aufgenommen sind, sind so geformt, dass die genannte Verdickung oder der Kragen haltend eingreift.

Insbesondere können die Nuten als T-Nuten geformt sein und jeder der Nutensteine kann einen seitlich hervorstehenden Kragen zum Eingreifen in eine der T-Nuten umfassen. Die Nuten haben demnach in einem Schnitt quer oder senkrecht zur Rotationsachse des zugehörigen Drehkolbens eine T-Form. Ein dem Inneren des Drehkolbens zugewandtes Ende der Nuteinsteine hat dabei ebenfalls eine T-Form, so dass der Nutenstein in der T-Nut gehalten wird. Grundsätzlich können alternativ oder ergänzend auch Schraubbefestigungen oder Klebeverbindungen zum Befestigen der Dichtleisten in den Nuten vorgesehen werden.

Die Dichtleisten und die zugehörigen Nuten können so geformt sein, dass die Dichtleisten in radialer Richtung des zugehörigen Drehkolbens gehalten werden, also unbeweglich sind. Hingegen kann etwa senkrecht hierzu, insbesondere in Richtung der Rotationsachse des Drehkolbens, ein Bewegen (und damit ein Einsetzen und Entnehmen) der Dichtleisten möglich sein. Somit können abgenutzte oder abgeriebene Dichtleisten leicht ausgetauscht werden.

Die dichtende Wirkung der Dichtleisten zu der Gehäuseinnenwand hängt von der Verformung der Dichtleisten ab. Dabei ist es vorteilhaft, wenn der Fluiddruck eine Verformung der Dichtleisten zur Gehäuseinnenwand hin bewirkt, und nicht etwa eine Verformung weg von der Gehäuseinnenwand. Jeder der Dichtleisten hat eine Seite, welche bei einer Drehwinkelstellung des zugehörigen Drehkolbens, bei welcher die Dichtleiste die Gehäuseinnenwand kontaktiert, einströmendem Fluid zugewandt ist. Diese Seite wird nachstehend als Fluidkontaktseite bezeichnet. Um eine Verformung zum dichtenden Kontaktieren der Gehäuseinnenwand herzustellen, hat die Fluidkontaktseite vorzugsweise keine konvexe Form oder zumindest an ihrem der Gehäuseinnenwand zugewandten Ende keine konvexe Form. Bevorzugt kann die Fluidkontaktseite vielmehr eine konkave Form haben oder zumindest an ihrem der Gehäuseinnenwand zugewandten Ende eine konkave Form haben. Alternativ kann ein im Wesentlichen ebener Verlauf der Fluidkontaktseite für eine je nach Umständen ebenfalls ausreichende Verformung sorgen.

Jede der Dichtleisten hat zudem eine Rückseite, welche der Fluidkontaktseite gegenüberliegt. Diese Rückseite ist nicht einströmendem Fluid zugewandt, wenn eine Drehwinkelstellung des zugehörigen Drehkolbens vorliegt, bei welcher die Dichtleiste die Gehäuseinnenwand kontaktiert beziehungsweise zu dieser benachbart ist. Die Form der Rückseite hat ebenfalls Auswirkungen auf die Verformung und damit die dichtende Wirkung. Die Rückseite ist vorzugsweise nicht konkav oder zumindest an einem der Gehäuseinnenwand zugewandten Ende nicht konkav. Bevorzugt ist die Rückseite konvex geformt oder zumindest an einem der Gehäuseinnenwand zugewandten Ende konvex geformt. Eine hinreichende Dichtungswirkung kann wiederum auch bei einer linearen oder ebenen Form der Rückseite möglich sein.

Die Dichtleisten können eine Kante aufweisen, an welcher ein dichtender Kontakt zur Gehäuseinnenwand bewirkt wird. Eine Kante kann sich aus einem nicht runden Querschnitt ergeben, insbesondere wenn die Fluidkontaktseite konkav und die Rückseite konvex ist.

Vorzugsweise verfügt jeder Drehkolben über (insbesondere genau) zwei Dichtleisten an gegenüberliegenden Winkelpositionen an seinem Außenumfang. Insbesondere können die beiden Winkelpositionen um einen Drehwinkel von 180° um die Rotationsachse des zugehörigen Drehkolbens zueinander versetzt sein. Zudem kann jeder Drehkolben zwei Vertiefungen umfassen, welche sich am Außenumfang an Winkelpositionen befinden, die ebenfalls um 180° zueinander versetzt und vorzugsweise jeweils um 90° zu den Winkelpositionen der beiden Dichtleisten versetzt sind. Dadurch wird erreicht, dass einströmendes Fluid stets gegen eine der Dichtleisten an jedem Drehkolben drückt und dadurch eine Rotation des Drehkolbens bewirkt. Zudem wird durch diese Anordnung erreicht, dass unabhängig von einer momentanen Drehstellung der Drehkolben stets eine Dichtung beider Drehkolben zur Gehäuseinnenwand bereitgestellt wird.

Zweckmäßigerweise können die Dichtleisten so bemessen sein und eine Gehäuseinnenwand so geformt sein, dass die Dichtleisten innerhalb eines Drehwinkelbereichs der Drehkolben die Gehäuseinnenwand dichtend kontaktieren. Dieser Drehwinkelbereich kann sich gegenüberliegend zu einem Kontaktbereich zwischen den beiden Drehkolben befinden. Je nach Drehwinkel des Drehkolbens kontaktiert also zumindest eine der Dichtleisten die Gehäuseinnenwand dichtend. Vorzugsweise ist die Formung der Gehäuseinnenwand derart, dass über einen Drehwinkelbereich, der beispielsweise zwischen 5° und 20° betragen kann, zwei Dichtleisten die Gehäuseinnenwand kontaktieren und ansonsten bloß eine Dichtleiste die Gehäuseinnenwand kontaktiert. Durch einen solchen Überlapp wird für jede Drehstellung sichergestellt, dass kein Fluid an den Drehkolben vorbei strömen kann, ohne diese in Drehung zu versetzen.

Jeder der Drehkolben kann an seinem Außenumfang einen Zahnkranz aufweisen. Die Drehkolben können sodann so angeordnet sein, dass ihre Zahnkränze ineinandergreifen. Hierdurch wird weitgehend verhindert, dass Fluid zwischen den beiden Drehkolben hindurchströmt. Vielmehr wird das Fluid am Rand zwischen den Drehkolben und der Gehäuseinnenwand befördert. Die Zahnkränze können durch die Vertiefungen und Dichtleisten unterbrochen sein und im Übrigen über den gesamten Umfang der beiden Drehkolben verlaufen. Unter einem Zahnkranz kann verstanden werden, dass eine Außenumfangsfläche des zugehörigen Drehkolbens radial hervorstehende Zähne aufweist. Vorzugsweise erstreckt sich jeder Zahn über die gesamte Höhe der Drehkolben entlang deren Rotationsachsen. In Umfangsrichtung ist die Außenfläche von jedem Drehkolben somit durch die Zähne definiert, wobei zwischen den Zähnen die Nuten für die Dichtleisten und die korrespondierenden Vertiefungen gebildet sind.

Insbesondere durch Temperaturschwankungen kann sich die Relativposition der beiden Drehkolben zueinander geringfügig ändern. Durch das Ineinandergreifen der Zahnkränze kann aber auch bei solchen Positionsschwankungen weiterhin eine dichtende Wirkung erreicht werden. Hingegen wären die Zahnkränze ungeeignet, eine Dichtung zur Gehäuseinnenwand bereitzustellen. Denn hier würden Positionsschwankungen mangels ineinandergreifender Zähne zu Leckströmen führen. Um dies zu vermeiden, wird eine Dichtung zur Gehäuseinnenwand nicht durch die Zahnkränze, sondern durch die Dichtleisten bewirkt.

Je nach Drehstellung der beiden Drehkolben wird ein weitgehend dichtender Kontakt zwischen diesen entweder durch die ineinandergreifenden Zahnkränze bereitgestellt, oder durch eine der Dichtleiste von einem der Drehkolben, welche in eine der Vertiefungen am anderen Drehkolben hineinragt.

Die Dichtleisten können in radialer Richtung von ihrem jeweiligen Drehkolben weiter nach außen ragen als der jeweilige Zahnkranz. Dadurch ist der Zahnkranz stets beabstandet von der Gehäuseinnenwand. Hierzwischen wird ein Freiraum gebildet, über welchen Fluid in Richtung der Austrittsöffnung gelangt. Der Freiraum wird in Umfangsrichtung der Drehkolben durch die Dichtleisten begrenzt.

Die Dichtleisten stehen über den jeweiligen Zahnkranz vorzugsweise um eine Radialstrecke hervor, welche zwischen 5% und 30%, insbesondere zwischen 10% und 25%, eines Radius des Zahnkranzes beträgt. Dieser Radius kann ab dem Mittelpunkt des Drehkolbens bis zum Außenumfang des zugehörigen Zahnkranzes gemessen sein. Die hervorstehende Radialstrecke beeinflusst die Größe einer Verformung der Dichtleistung und beeinflusst somit die Dichtungseigenschaften. Zudem ist die hervorstehende Radialstrecke maßgeblich für die Menge an Fluid, die an dem zugehörigen Drehkolben vorbei befördert wird. Es hat sich gezeigt, dass mit den vorgenannten Werten eine gute Dichtung erreicht werden kann und bereits bei geringem Fluiddruck ein hoher Wirkungsgrad erreicht werden kann.

Eine radiale Größe von Zähnen der Zahnkränze beträgt vorzugsweise höchstens 15%, vorzugsweise höchstens 10%, eines Radius des Zahnkranzes. Hiermit wird ein Fluidfluss zwischen den beiden Zahnkränzen hindurch genügend weit reduziert. Größere Zähne könnten je nach Fluid zudem nachteilige Wirkungen auf die Fluidströmung haben. Der Radius des Zahnkranzes kann durch die Strecke von dessen Mittelpunkt bis zu seinem äußeren Umfang, also dem äußeren Ende der Zähne, definiert sein.

Die Drehkolben können jeweils einen runden, insbesondere kreisförmigen Querschnitt haben, wobei der Außenumfang der Kreisform durch den Zahnkranz, die Vertiefungen zum Eingreifen der Dichtleisten und die gegebenenfalls vorhandenen Nuten zum Halten der Dichtleisten variiert ist.

Der Drehkolbenmotor wird mit zwei Drehkolben beschrieben. Grundsätzlich können aber auch weitere Drehkolben im selben Innenraum oder einem weiteren Innenraum vorhanden sein. Zudem kann die Anzahl an Dichtleisten und zugehörigen Vertiefungen von der zu den verschiedenen Ausführungsformen beschriebenen Anzahl abweichen.

Es können prinzipiell auch ein oder mehrere weitere Drehkolbenmotoren eingesetzt werden, um noch verbleibende Energie umzuwandeln. Diese Drehkolbenmotoren sind wie der hier beschriebene Drehkolbenmotor gebildet und können insbesondere im Fluidkreislauf oder außerhalb des hier beschriebenen Fluidkreislaufs, insbesondere in einem eigenen Kreisprozess, angeordnet sein.

Die als zusätzliche gegenständlichen Merkmale beschriebenen Eigenschaften der Erfindung sind auch als Varianten des erfindungsgemäßen Verfahrens aufzufassen, und umgekehrt.

Weitere Vorteile und Merkmale der Erfindung werden nachstehend mit Bezug auf die beigefügten schematischen Figuren beschrieben. Hierin zeigen:
- Fig. 1: ein Ausführungsbeispiel eines erfindungsgemäßen Blockheizkraftwerks;
- Fig. 2: einen Querschnitt eines Drehkolbenmotors des Blockheizkraftwerks aus Fig. 1 und
- Fig. 3: einen vergrößerten Ausschnitt aus Fig. 2.

Gleiche und gleich wirkende Bestandteile sind in den Figuren in der Regel mit denselben Bezugszeichen gekennzeichnet.

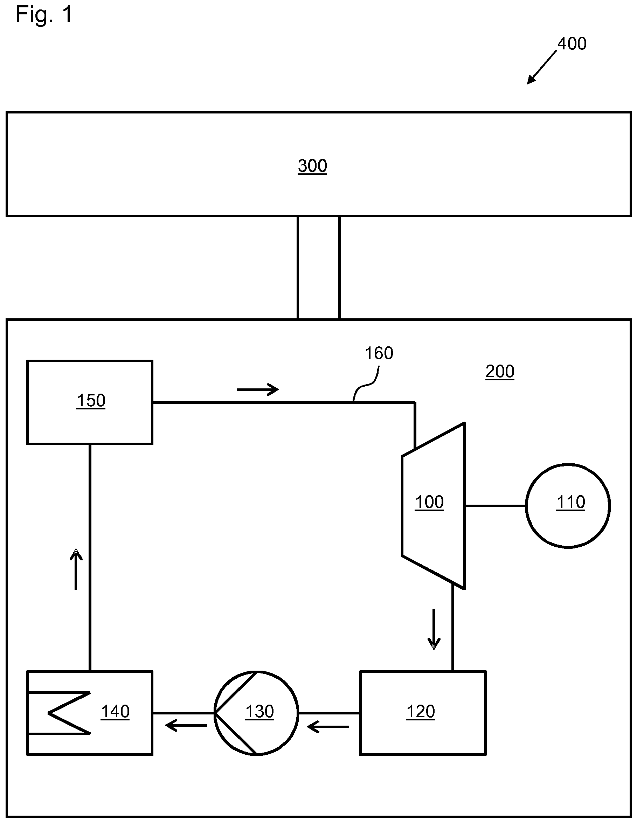

In Fig. 1 ist schematisch ein Ausführungsbeispiel eines erfindungsgemäßen Blockheizkraftwerks (BHKW) 400 gezeigt.

Mit dem Bezugszeichen 300 sind Komponenten bezeichnet, die üblicherweise bei einem BHKW 400 vorhanden sind. Diese Komponenten umfassen insbesondere mindestens einen Brennraum und Stromerzeugungsmittel. In dem oder den Brennräumen wird ein Energieträger verbrannt und die freigesetzte Wärmeenergie wird teilweise in Bewegungsenergie umgewandelt. Die Bewegungsenergie wird sodann zumindest teilweise durch die Stromerzeugungsmittel in elektrische Energie umgewandelt. Der oder die Brennräume können Teil einer Verbrennungsmaschine sein, welche auch als Teil der Stromerzeugungsmittel angesehen werden kann. Die Stromerzeugungsmittel können beispielsweise einen Generator umfassen, der mit der Verbrennungsmaschine gekoppelt ist. Alternativ oder zusätzlich kann eine Turbine vorhanden sein, welche mit dem Generator gekoppelt ist. Das durch die Verbrennung im Brennraum entstehende Medium, nachfolgend Wärmeträger, treibt die Verbrennungsmaschine oder die Turbine an, womit elektrische Energie erzeugt wird. Bei dem Generator der Stromerzeugungsmittel kann es sich gerade um den im Späteren erwähnten Generator 110 handeln.

Eine verbleibende Wärmeenergie des Wärmeträgermediums kann sodann noch für insbesondere Heizzwecke genutzt werden.

Bei dem BHKW 400 ist außerdem ein Abwärmenutzungssystem 200 vorhanden, welches Abwärme, das heißt die verbleibende Wärmeenergie des Wärmeträgers, weiter zum Erzeugen elektrischer Energie nutzt.

Das Abwärmenutzungssystem 200 verfügt hierzu über einen Kreisprozess, insbesondere einen organischen Rankine-Kreisprozess (ORC). Der Kreisprozess umfasst einen Wärmetauscher 150, durch den Wärmeenergie vom Wärmeträger auf ein Fluid übertragen wird, welches im Kreisprozess zirkuliert. Das Fluid kann so gewählt sein, dass durch die im Wärmetauscher 150 aufgenommene Energie die Siedetemperatur des Fluids überschritten wird. Der Wärmetauscher 150 kann somit als Verdampfer wirken. Ein Leitungssystem 160 leitet das Fluid vom Wärmetauscher 150 zu einem Drehkolbenmotor 100, welcher durch das Fluid angetrieben wird. Der Drehkolbenmotor 100 ist mit einem Generator 110 gekoppelt, welcher durch eine Rotation des Drehkolbenmotors 100 elektrische Energie erzeugt.

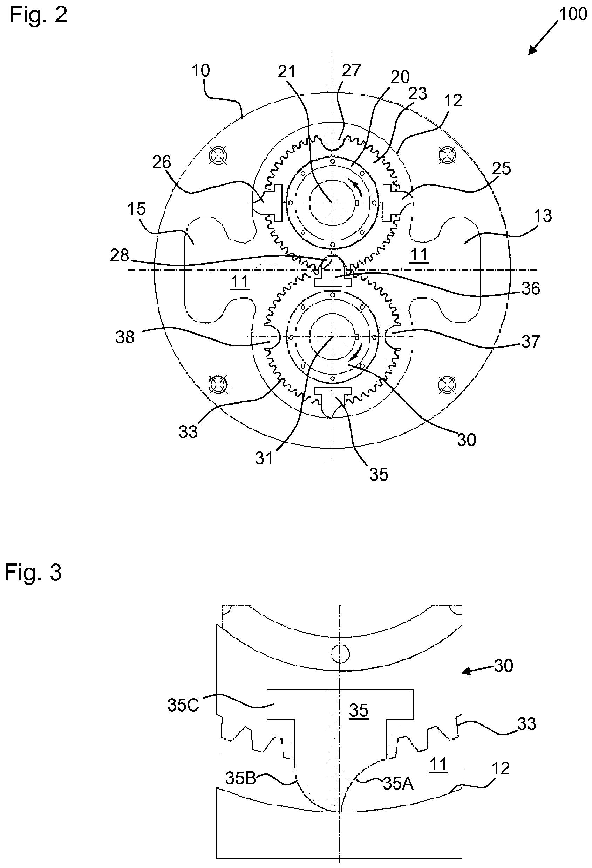

Die Gestaltung des Drehkolbenmotors 100 wird später mit Bezug auf die Figuren 2 und 3 näher beschrieben.

Auf den Drehkolbenmotor 100 folgt ein Kondensator, in welchem das Fluid abgekühlt und verflüssigt wird. Sodann wird es durch eine Speisepumpe 130 in Richtung des Wärmetauschers 150 gepumpt. Fakultativ kann zwischen der Speisepumpe 130 und dem Wärmetauscher 150 ein Vorwärmer 140 vorhanden sein. Dieser kann als Wärmetauscher gebildet sein und erhitzt das Fluid insbesondere mit Hilfe von Wärmeenergie der Komponenten 300. Beispielsweise kann der Vorwärmer 140 ebenfalls zum Aufnehmen von Wärmeenergie des vorgenannten Wärmeträgers angeordnet sein.

Die Temperatur und der Druck des Fluids im Kreisprozess sind verhältnismäßig gering. Damit dennoch mit möglichst hohem Wirkungsgrad elektrische Energie erzeugt werden kann, ist die Gestaltung des Drehkolbenmotors 100 entscheidend. Dieser umfasst mindestens zwei einander kontaktierende Drehkolben. Der genauere Aufbau ist in Fig. 2 schematisch gezeigt. Ein vergrößerter Ausschnitt hiervon ist in Fig. 3 dargestellt.

Der Drehkolbenmotor 100 wird durch das durchströmende Fluid angetrieben und dient der Umwandlung von Energie des Fluids in Rotationsenergie. Hierzu umfasst der Drehkolbenmotor 100 als wesentliche Komponenten zwei Drehkolben 20 und 30, welche in einem Innenraum 11 angeordnet sind. Dieser wird durch eine Gehäuseinnenwand 12 eines Gehäuses 10 begrenzt.

Eine nicht näher dargestellte Eintrittsöffnung 13 ermöglicht, dass das Fluid in den Innenraum 11 einströmt. Bei dem Fluid kann es sich prinzipiell um eine beliebige Flüssigkeit oder auch ein beliebiges Gas oder ein Flüssigkeits-Gasgemisch handeln.

Am Innenraum 11 ist zudem eine Austrittsöffnung 15 für das Fluid vorhanden. Strömt das Fluid von der Eintrittsöffnung 13 durch den Innenraum 11 zur Austrittsöffnung 15, so muss es hierzu die beiden Drehkolben 20, 30 passieren und versetzt diese dabei in Rotation. Mit den Bezugszeichen 21 und 31 sind die Rotationsachsen der beiden Drehkolben 20 und 30 gekennzeichnet. Die Rotationsachsen 21, 31 erstrecken sich in die Zeichnungsebene hinein.

Für eine effiziente Funktionsweise ist die Gestaltung der Drehkolben 20, 30 entscheidend. Diese sollen eine Dichtung zueinander und eine Dichtung zur umgebenden Gehäuseinnenwand 12 bereitstellen, so dass das Fluid bei Stillstand der Drehkolben 20, 30 nicht zur Austrittsöffnung 15 gelangen kann.

Gleichzeitig sollen die Drehkolben 20, 30 leicht durch das Fluid antreibbar sein, also bereits bei geringem Druck rotieren.

Zu diesen Zwecken verfügen die beiden Drehkolben 20 und 30 an ihren jeweiligen Außenseiten über Dichtleisten 25, 26, 35, 36. Die Außenseiten können als Mantelflächen von in etwa zylinderförmigen Drehkolben 20, 30 angesehen werden. Die Dichtleisten 25, 26, 35, 36 erstrecken sich vorzugsweise über die gesamte Höhe des Innenraums 11, wobei die Höhe in Richtung der Rotationsachsen 21, 31 verlaufen kann.

Der Drehkolben 20 verfügt über mindestens zwei, vorzugsweise genau zwei, Dichtleisten 25, 26. Ebenso sind am Drehkolben 30 mindestens zwei, vorzugsweise genau zwei, Dichtleisten 35, 36 angeordnet. Die Dichtleisten 25, 26, 35, 36 ragen radial über den übrigen Außenumfang des zugehörigen Drehkolbens 20, 30 hinaus. Die Dichtleisten 25, 26, 35, 36 sind bevorzugt in Nuten am jeweiligen Drehkolben 20, 30 aufgenommen und können vorzugsweise aus einem anderen Material bestehen als der Teil der Drehkolben 20, 30, in dem die Nuten gebildet sind. Die Dichtleisten 25, 26, 35, 36 bestehen aus einem verformbaren Material. Bei diesem kann es sich beispielsweise um Gummi, Harz oder einen Kunststoff handeln. Dadurch können die Dichtleisten 25, 26, 35, 36 durch gegenströmendes Fluid geringfügig verformt und gegen die Gehäuseinnenwand 12 gedrückt werden. Hiermit wird eine besonders gute Dichtung zur Gehäuseinnenwand 12 erreicht. Prinzipiell können die Dichtleisten 25, 26, 35, 36 aber auch aus einem starren Material bestehen, etwa aus Metall. Alternativ oder ergänzend können die Dichtleisten 25, 26, 35, 36 mit etwas Spielraum in ihren zugehörigen Nuten aufgenommen sein, womit der Fluiddruck die Dichtleisten 25, 26, 35, 36 leicht verkippen kann. Dadurch können prinzipiell die Dichtleisten 25, 26, 35, 36 ebenfalls dichtend gegen die Gehäuseinnenwand 12 gedrückt werden.

Die beiden Drehkolben 20, 30 sind so im Innenraum 11 angeordnet, dass sie einander berühren. Dadurch wird ein Fluidfluss zwischen den Drehkolben hindurch weitgehend ausgeschlossen. Die Rotationsachsen 21 und 31 können parallel zueinander stehen. Es ist aber auch eine Neigung zwischen den Rotationsachsen 21, 31 möglich, solange ein weitgehend dichtender Kontakt zwischen den Drehkolben 20, 30 gewährleistet ist.

Hierzu umfassen die Drehkolben 20, 30 an ihrem jeweiligen Außenumfang auch je einen Zahnkranz 23, 33, welcher mit dem übrigen Teil des zugehörigen Drehkolbens 20, 30 starr verbunden ist. Die beiden Zahnkränze 23, 33 sind so bemessen und angeordnet, dass sie ineinandergreifen. Dadurch drehen sich beide Zahnkränze 23, 33 zusammen und bilden kaum Hohlräume zwischen einander. Fluid kann daher zwischen den beiden Zahnkränzen 23, 33 kaum durchtreten.

Außerdem umfassen die Drehkolben 20 und 30 an ihrem jeweiligen Außenumfang Vertiefungen 27, 28 und 37, 38. Die Anzahl der Vertiefungen 27, 28 des ersten Drehkolbens 20 ist gleich der Anzahl an Dichtleisten 35, 36 des zweiten Drehkolbens 30 gewählt. Analog ist die Anzahl der Vertiefungen 37, 38 des zweiten Drehkolbens 30 gleich der Anzahl an Dichtleisten 25, 26 des ersten Drehkolbens 20 gewählt. Zudem sind die Vertiefungen 27, 28, 37, 38 und die Dichtleisten 25, 26, 35, 36 an den beiden Drehkolben 20, 30 so angeordnet, dass bei Rotation der beiden Drehkolben 20 und 30 die Dichtleisten 25, 26 des ersten Drehkolbens 20 gerade auf die Vertiefungen 37, 38 des zweiten Drehkolbens 30 treffen. Ebenso treffen die Dichtleisten 35, 36 des zweiten Drehkolbens 30 gerade auf die Vertiefungen 27, 28 des ersten Drehkolbens 20. Hierzu können beispielsweise am Außenumfang jedes Drehkolbens 20, 30 in jeweils 90°-Abständen eine Vertiefung und eine Dichtleiste abwechseln. In anderen Worten sind die beiden Dichtleisten 25, 26 in einem Azimutwinkel von 180° (das heißt einem 180°-Winkel um die Rotationsachse 21 herum) zueinander beabstandet. Die beiden Vertiefungen 27, 28 sind ebenfalls um einen Azimutwinkel von 180° zueinander versetzt und zusätzlich jeweils um einen Azimutwinkel von 90° zu den Dichtleisten 25, 26 versetzt. Entsprechendes gilt für die Dichtleisten 35, 36 und Vertiefungen 37, 38 des anderen Drehkolbens 30. Grundsätzlich sind auch andere Winkel möglich. Insbesondere wenn mehr als zwei Dichtleisten und zwei Vertiefungen pro Drehkolben 20, 30 vorgesehen werden, ergeben sich auch andere Azimutwinkel. Eine Größe und Form der Vertiefungen ist so gewählt, dass die Dichtleisten in diesen, insbesondere dichtend, aufgenommen werden können.

Wie auch die Zahnkränze 23, 33 bewirken die Dichtleisten 25, 26 35, 36 zusammen mit den Vertiefungen 27, 28, 37, 38, dass das Fluid kaum zwischen den beiden Drehkolben hindurch treten kann.

Unabhängig von einer momentanen Drehstellung soll zudem stets eine der Dichtleisten 25, 26 35, 36 von jedem Drehkolben 20, 30 eine Dichtung zur Gehäuseinnenwand 12 bereitstellen. Hierfür ist ein Drehwinkel relevant, über den dieselbe Dichtleiste 25, 26 35, 36 eine Dichtung zur Gehäuseinnenwand 12 bewirkt. Dieser Drehwinkel kann, wie in Fig. 2 dargestellt, größer als 180° sein und beispielsweise zwischen 185° und 240° betragen. Hierzu hat die Gehäusewand 12 an jedem der Drehkolben eine Kreisabschnittsform, wobei diese Form einen Kreisabschnitt von größer 180° bildet, also mehr als einen Halbkreis bildet.

Die Aufnahme der Dichtleisten 25, 26 35, 36 in ihren zugehörigen Nuten ist näher in Fig. 3 erkennbar. Beispielhaft für alle Dichtleisten 25, 26 35, 36 ist dort die Dichtleiste 35 in ihrem Querschnitt gezeigt. Die Dichtleiste 35 kann profilartig geformt sein, also über ihre Länge (insbesondere in Richtung der Rotationsachse 31) hinweg die gleiche Querschnittsform aufweisen. Wie dargestellt, bildet die Querschnittsform einen Nutenstein. Bei diesem ist zum inneren Ende der Dichtleiste 35 hin ein Kragen 35C gebildet. Dieser greift in eine T-förmige Vertiefung/Nut ein. Dadurch wird verhindert, dass sich der Nutenstein in radialer Richtung aus der Nut des Drehkolbens unbeabsichtigt lösen kann. Ein Einsetzten und Entfernen des Nutensteins 35 ist in Längsrichtung, also in Richtung der Rotationsachse 31, möglich. Durch die Bildung als Nutensteine sind die Dichtleisten einerseits leicht zu befestigen. Andererseits wird auch ein Austauschen vereinfacht. Dies ist bedeutsam, da es aufgrund des dichtenden Kontakts zur Gehäuseinnenwand 12 zu einem allmählichen Abrieb der Dichtleisten 25, 26, 35, 36 kommen kann und so ein Austausch erforderlich werden kann.

Wie in Fig. 2 gezeigt, drückt das Fluid im Innenraum 11 gegen die Drehkolben 20, 30 und diejenigen Dichtleisten 25, 35, die in der momentanen Drehstellung der Drehkolben 20, 30 der Eintrittsöffnung 13 zugewandt sind. Durch diesen Druck drehen sich die Drehkolben 20, 30 in Richtung der in Fig. 2 eingezeichneten Pfeile.

Für die Drehung und insbesondere die dichtende Wirkung der Dichtleisten 25, 35 ist ihre Form wichtig. Dies wird näher mit Bezug auf Fig. 3 beschrieben. Dort ist eine Dichtleiste 35 gezeigt, welche radial vom Zahnkranz 33 hervorsteht. Die Dichtleiste 35 hat einen Punkt maximaler radialer Ausdehnung, beziehungsweise eine Kante, die sich in die Zeichenebene hinein erstreckt (oder in Richtung der Rotationsachse 31 erstreckt). Von dieser Kante aus hat die Dichtleiste 35 eine Fläche 35A oder Fluidkontaktseite 35A, welche dem einströmenden Fluid zugewandt ist (dies gilt für Drehstellungen, in denen die Dichtleiste 35 die Gehäuseinnenwand 12 kontaktiert). Auf der anderen Seite der genannten Kante hat die Dichtleiste 35 eine weitere Fläche 35B, welche auch als Rückseite 35B bezeichnet wird. Die Rückseite 35B ist nicht dem einströmenden Fluid zugewandt, wenn die Dichtleiste 35 die Gehäuseinnenwand 12 kontaktiert.

Die Fluidkontaktseite 35A weist eine Vertiefung oder eine konkave Form auf, während die Rückseite 35B eine nach außen gewölbte oder konvexe Form hat. Hierdurch wird das äußere Ende der Dichtleiste 35, also der radial am weitesten hervorstehende Teil, durch das gegenströmende Fluid quer oder in etwa senkrecht zur radialen Richtung verformt. Somit wird die Dichtleiste 35 gegen die Gehäuseinnenwand 12 gedrückt. In Fig. 3 wird das untere Ende der Dichtleiste 35 in etwa nach links und somit gegen die Gehäuseinnenwand 12 verformt.

Vorteilhafterweise kann dadurch eine besonders gute Dichtung erzeugt werden, ohne aber eine ungebührend hohe Reibung zwischen den Dichtleisten und der Gehäuseinnenwand zu erzeugen. Bereits bei verhältnismäßig niedrigem Fluiddruck können die Drehkolben daher vorteilhafterweise in Rotation versetzt werden. Somit kann auch ein niedriger Fluiddruck mit hoher Effizienz zur Gewinnung elektrischer Energie genutzt werden.

Zwar wird bei der vorstehenden Ausführungsform eine spezielle Form der Dichtleisten verwendet. Es ist aber zu betonen, dass auch mit anderen Formen grundsätzlich geeignete Dichtungseigenschaften bewirkt werden können und die Erfindung nicht auf die in den Zeichnungen dargestellte (bevorzugte) Form der Dichtleisten beschränkt ist. So kann es genügen, wenn entweder die Fluidkontaktseite oder die Rückseite wie beschrieben gebildet ist. Die andere Seite kann beispielsweise eben sein oder wie die übrige Seite geformt sein. Auch ist möglich, dass die Formen der Fluidkontaktseite und der Rückseite allein an einem Endbereich der Dichtleiste wie beschrieben geformt sind und nicht etwa im gesamten Bereich, der radial über den zugehörigen Zahnkranz hervorsteht. Grundsätzlich kann für hinreichende Dichteigenschaften genügen, dass die Dichtleisten und relativ zum Zahnkranz verformbar oder bewegbar sind und insbesondere nicht einstückig mit dem Zahnkranz gebildet sind.

## Patentansprüche

1. Blockheizkraftwerk mit
- einem Brennraum zum Verbrennen eines Energieträgers,
- Stromerzeugungsmitteln zum Gewinnen von elektrischer Energie aus Wärmeenergie, welche durch Verbrennen des Energieträgers freigesetzt wird,
- einem Abwärmenutzungssystem (200), welches eingerichtet ist zum Umwandeln von Abwärme in elektrische Energie, wobei das Abwärmenutzungssystem (200) zumindest einen Drehkolbenmotor (100) und einen Generator (110) umfasst, wobei der Drehkolbenmotor (100) mit Hilfe der Abwärme antreibbar ist und mit dem Generator (110) gekoppelt ist, um bei Rotation des Drehkolbenmotors (100) mit dem Generator (110) elektrische Energie zu erzeugen,
- wobei der Drehkolbenmotor (100) ein Gehäuse (10) aufweist, welches einen Innenraum (11) bildet, in dem mindestens zwei Drehkolben (20, 30) so angeordnet sind, dass sie gemeinsam rotieren, wenn der Innenraum (11) von einem Fluid durchströmt wird,
- wobei jeder Drehkolben (20, 30) an seinem Außenumfang mindestens zwei Dichtleisten (25, 26, 35, 36) und mindestens zwei Vertiefungen (27, 28, 37, 38) aufweist, wobei die Formen der Vertiefungen (27, 28, 37, 38) und der Dichtleisten (25, 26, 35, 36) gewählt sind zum Eingreifen der Dichtleisten (25, 26, 35, 36) von jeweils einem der Drehkolben (20, 30) in die Vertiefungen (27, 28, 37, 38) des jeweils anderen Drehkolbens (20, 30),
- wobei die Dichtleisten (25, 26, 35, 36) in Radialrichtung zum dichtenden Kontaktieren einer Gehäuseinnenwand (12) bemessen sind,
- wobei die Dichtleisten (25, 26, 35, 36) ein verformbares Material umfassen, so dass sie durch das Fluid dichtend gegen die Gehäuseinnenwand (12) drückbar sind.

2. Blockheizkraftwerk nach Anspruch 1,
**dadurch gekennzeichnet,**
**dass** das Abwärmenutzungssystem (200) einen Kreisprozess umfasst, insbesondere einen Organischen Rankine-Kreisprozess, mit einem Leitungssystem (160) zum Zirkulieren des Fluids und einem Wärmetauscher (150) zum Übertragen der Abwärme auf das Fluid, wobei der Drehkolbenmotor (100) im Leitungssystem (160) angeordnet ist, um vom Fluid durchströmt zu werden.

3. Blockheizkraftwerk nach Anspruch 1 oder 2,
**dadurch gekennzeichnet,**
**dass** die Stromerzeugungsmittel zum Erzeugen elektrischer Energie einen Generator umfassen, bei welchem es sich gerade um denselben Generator (110) handelt, mit dem der Drehkolbenmotor (100) gekoppelt ist.

4. Blockheizkraftwerk nach einem der Ansprüche 1 bis 3,
**dadurch gekennzeichnet,**
**dass** jede der Dichtleisten (25, 26, 35, 36) bei einer Drehwinkelstellung des zugehörigen Drehkolbens (20, 30), bei welcher diese Dichtleiste (25, 26, 35, 36) die Gehäuseinnenwand (12) kontaktiert, eine Fluidkontaktseite (35A) aufweist, welche einströmendem Fluid zugewandt ist, und
**dass** die Fluidkontaktseite (35A) eine konkave Form hat.

5. Blockheizkraftwerk nach einem der Ansprüche 1 bis 4,
**dadurch gekennzeichnet,**
**dass** jede der Dichtleisten (25, 26, 35, 36) eine Rückseite (35B) aufweist, welche der Fluidkontaktseite (35A) gegenüberliegt und bei einer Drehwinkelstellung des zugehörigen Drehkolbens (20, 30), bei welcher diese Dichtleiste (25, 26, 35, 36) die Gehäuseinnenwand (12) kontaktiert, nicht einströmendem Fluid zugewandt ist, und
**dass** die Rückseite (35B) konvex geformt ist.

6. Blockheizkraftwerk nach einem der Ansprüche 1 bis 5,
**dadurch gekennzeichnet,**
**dass** die Drehkolben (20, 30) an ihrem jeweiligen Außenumfang Nuten zum Aufnehmen und Halten der Dichtleisten (25, 26, 35, 36) aufweisen und
**dass** die Dichtleisten (25, 26, 35, 36) als Nutensteine gebildet sind zum haltenden Eingreifen in die Nuten des jeweiligen Drehkolbens (20, 30).

7. Blockheizkraftwerk nach einem der Ansprüche 1 bis 6,
**dadurch gekennzeichnet,**
**dass** jeder Drehkolben (20, 30) genau zwei Dichtleisten (25, 26, 35, 36) an gegenüberliegenden Winkelpositionen an seinem Außenumfang umfasst und dass jeder Drehkolben (20, 30) genau zwei Vertiefungen (27, 28, 37, 38) umfasst, welche sich am Außenumfang an Winkelpositionen befinden, die jeweils um 90° zu den Winkelpositionen der beiden Dichtleisten (25, 26, 35, 36) versetzt sind.

8. Blockheizkraftwerk nach einem der Ansprüche 1 bis 7,
**dadurch gekennzeichnet,**
**dass** die Dichtleisten (25, 26, 35, 36) so bemessen sind und eine Gehäuseinnenwand (12) so geformt ist, dass die Dichtleisten (25, 26, 35, 36) innerhalb eines Drehwinkelbereichs der Drehkolben (20, 30) die Gehäuseinnenwand (12) dichtend kontaktieren.

9. Blockheizkraftwerk nach einem der Ansprüche 1 bis 8,
**dadurch gekennzeichnet,**
**dass** jeder der Drehkolben (20, 30) an seinem Außenumfang einen Zahnkranz (23, 33) aufweist und
**dass** die Drehkolben (20, 30) so angeordnet sind, dass ihre Zahnkränze (23, 33) ineinandergreifen.

10. Blockheizkraftwerk nach Anspruch 9,
**dadurch gekennzeichnet,**
**dass** die Dichtleisten (25, 26, 35, 36) in radialer Richtung von ihrem jeweiligen Drehkolben (20, 30) weiter nach außen ragen als der jeweilige Zahnkranz (23, 33).

11. Blockheizkraftwerk nach Anspruch 9 oder 10,
**dadurch gekennzeichnet,**
**dass** die Dichtleisten (25, 26, 35, 36) über den jeweiligen Zahnkranz (23, 33) um eine Radialstrecke hervorstehen, welche zwischen 5% und 30%, insbesondere zwischen 10% und 25%, eines Radius des Zahnkranzes (23, 33) beträgt.

12. Blockheizkraftwerk nach einem der Ansprüche 9 bis 11,
**dadurch gekennzeichnet,**
**dass** jeder der Zahnkränze (23, 33) durch die Vertiefungen (27, 28, 37, 38) und die Nuten zum Aufnehmen der Dichtleisten (25, 26, 35, 36) des zugehörigen Drehkolbens (20, 30) unterbrochen ist und im Übrigen über den gesamten Umfang des zugehörigen Drehkolbens (20, 30) verläuft.

13. Verfahren zum Betreiben eines Blockheizkraftwerks,
- wobei ein Energieträger in einem Brennraum verbrannt wird,
- wobei aus Wärmeenergie, welche durch Verbrennen des Energieträgers freigesetzt wird, mit Stromerzeugungsmitteln elektrische Energie gewonnen wird,
- wobei mit einem Abwärmenutzungssystem (200) Abwärme in elektrische Energie umgewandelt wird, wobei das Abwärmenutzungssystem (200) zumindest einen Drehkolbenmotor (100) und einen Generator (110) umfasst,
- wobei der Drehkolbenmotor (100) mit Hilfe der Abwärme angetrieben wird und mit dem Generator (110) gekoppelt ist, womit bei Rotation des Drehkolbenmotors (100) mit dem Generator (110) elektrische Energie erzeugt wird,
- wobei der Drehkolbenmotor (100) ein Gehäuse (10) aufweist, welches einen Innenraum (11) bildet, in dem mindestens zwei Drehkolben (20, 30) so angeordnet sind, dass sie gemeinsam rotieren, wenn der Innenraum (11) von einem Fluid durchströmt wird.
wobei jeder Drehkolben (20, 30) an seinem Außenumfang mindestens zwei Dichtleisten (25, 26, 35, 36) und mindestens zwei Vertiefungen (27, 28, 37, 38) aufweist, wobei die Formen der Vertiefungen (27, 28, 37, 38) und der Dichtleisten (25, 26, 35, 36) so gewählt sind, dass die Dichtleisten (25, 26, 35, 36) von jeweils einem der Drehkolben (20, 30) in die Vertiefungen (27, 28, 37, 38) des jeweils anderen Drehkolbens (20, 30) eingreifen,
- wobei die Dichtleisten (25, 26, 35, 36) in Radialrichtung eine Gehäuseinnenwand (12) dichtend kontaktieren,
- wobei die Dichtleisten (25, 26, 35, 36) ein verformbares Material umfassen, so dass sie durch das Fluid dichtend gegen die Gehäuseinnenwand (12) gedrückt werden.

## Claims

1. Cogeneration plant comprising
- a combustion chamber for combusting an energy carrier,
- electrical energy generation means for generating electrical energy from heat energy generated by combusting the energy carrier,
- a waste heat recovery system (200) which is configured to convert waste heat in electrical energy, wherein the waste heat recovery system (200) comprises at least one rotary engine (100) and one generator (110), wherein the rotary engine (100) can be driven with the help of waste heat and is coupled with the generator (110) for generating electrical energy with the generator (110) upon rotation of the rotary engine (100),
- wherein the rotary engine (100) comprises a housing (10) forming an inner room (11) in which at least two rotary pistons (20, 30) are arranged such that they rotate jointly when a fluid flows through the inner room (11),
- wherein each rotary piston (20, 30) comprises at least two sealing strips (25, 26, 35, 36) and at least two recesses (27, 28, 37, 38) at its outer circumference, wherein the shapes of the recesses (27, 28, 37, 38) and the sealing strips (25, 26, 35, 36) are chosen for engagement of the sealing strips (25, 26, 35, 36) of each one of the rotary pistons (20, 30) with the recesses (27, 28, 37, 38) of the respectively other rotary piston (20, 30),
- wherein the sealing strips (25, 26, 35, 36) are sized in radial direction for sealingly contacting a housing inner surface (12),
- wherein the sealing strips (25, 26, 35, 36) comprise a deformable material so that the sealing strips (25, 26, 35, 36) can be sealingly pressed against the housing inner surface (12) by the fluid.

2. Cogeneration plant as defined in claim 1,
**characterized in that**
the waste heat recovery system (200) comprises a cycle, in particular an organic Rankine cycle, with a line system (160) for circulating the fluid, and a heat exchanger (150) for transferring the waste heat to the fluid, wherein the rotary enengine (100) is arranged in the line system (160) to allow the fluid to flow through it.

3. Cogeneration plant as defined in claim 1 or 2,
**characterized in that**
the electrical energy generation means comprises a generator for generating electrical energy, which generator is the same generator (110) that is coupled with the rotary engine (100).

4. Cogeneration plant as defined in any one of the claims 1 to 3,
**characterized in that**
each sealing strip (25, 26, 35, 36) has, in a rotational position of the respective rotary piston (20, 30) in which that sealing strip (25, 26, 35, 36) contacts the housing inner surface (12), a fluid contact surface (35A) facing incoming fluid, and
the fluid contact surface (35A) has a concave shape.

5. Cogeneration plant as defined in any one of the claims 1 to 4,
**characterized in that**
each of the sealing strips (25, 26, 35, 36) has a back side (35B) which is opposite the fluid contact surface (35A), and which does not face incoming fluid in a rotational position of the respecitve rotary piston (20, 30) in which that sealing strip (25, 26, 35, 36) contacts the housing inner surface (12), and
the back side (35B) has a convex shape.

6. Cogeneration plant as defined in any one of the claims 1 to 5,
**characterized in that**
the rotary pistons (20, 30) comprise at their respective outer circumferences grooves for receiving and securing the sealing strips (25, 26, 35, 36) and the sealing strips (25, 26, 35, 36) are formed as groove stones for securely engaging with the grooves of the respective rotary piston (20, 30).

7. Cogeneration plant as defined in any one of the claims 1 to 6,
**characterized in that**
each of the rotary pistons (20, 30) comprises exactly two sealing strips (25, 26, 35, 36) at opposite angle positions at its outer circumference and
each rotary piston (20, 30) comprises exactly two recesses (27, 28, 37, 38) at angle positions at the outer circumference which are offset to the angle positions of the two sealing strips (25, 26, 35, 36) by 90°, respectively.

8. Cogeneration plant as defined in any one of the claims 1 to 7,
**characterized in that**
the sealing strips (25, 26, 35, 36) are sized and formed at a housing inner surface (12) such that the sealing strips (25, 26, 35, 36) sealingly contact the housing inner surface (12) within an angle range of the rotary pistons (20, 30).

9. Cogeneration plant as defined in any one of the claims 1 to 8,
**characterized in that**
each of the rotary pistons (20, 30) comprises at its outer circumference a gear rim (23, 33), and
the rotary pistons (20, 30) are arranged such that their gear rims (23, 33) mesh.

10. Cogeneration plant as defined in claim 9,
**characterized in that**
the sealing strips (25, 26, 35, 36) extend in a radial direction further from their respective rotary piston (20, 30) than the respective gear rim (23, 33).

11. Cogeneration plant as defined in claim 9 or 10,
**characterized in that**
the sealing strips (25, 26, 35, 36) extend over the respective gear rim (23, 33) by a radial distance which is between 5% and 30%, in particular between 10% and 25% of a radius of the gear rim (23, 33).

12. Cogeneration plant as defined in any one of the claims 9 to 11,
**characterized in that**
each of the gear rims (23, 33) is interrupted by the recesses (27, 28, 37, 38) and the grooves for receiving the sealing strips (25, 26, 35, 36) of the respective rotary piston (20, 30) and otherwise extends over the whole circumference of the respective rotary piston (20, 30).

13. Method for operating a cogeneration plant,
- wherein an energy carrier is combusted in a combustion chamber,
- wherein electrical energy is generated with electrical energy generation means from heat energy which is released by combusting the energy carrier,
- wherein waste heat is converted in electrical energy with a waste heat recovery system (200) wherein the waste heat recovery system (200) comprises at least a rotary engine (100) and a generator (110),
- wherein the rotary engine (100) is driven with the help of the waste heat and is coupled with the generator (110) wherein electrical energy is generated with the generator (110) upon rotation of the rotary engine (100),
- wherein the rotary engine (100) comprises a housing (10) which forms an inner room (11) in which at least two rotary pistons (20, 30) are arranged such that they rotate jointly when a fluid flows through the inner room (11),
wherein each of the rotary pistons (20, 30) comprises at least two sealing strips (25, 26, 35, 36) and at least two recesses (27, 28, 37, 38) at its outer circumference, wherein the shapes of the recesses (27, 28, 37, 38) and the sealing strips (25, 26, 35, 36) is chosen such that the sealing strips (25, 26, 35, 36) of each one of the rotary pistons (20, 30) engage with the recesses (27, 28, 37, 38) of the respectively other rotary pistons (20, 30),
- wherein the sealing strips (25, 26, 35, 36) sealingly contact a housing inner surface (12) in a radial direction,
- wherein the sealing strips (25, 26, 35, 36) comprise a deformable material to be sealingly pressed by the fluid against the housing inner surface (12).

## Revendications

1. Centrale de cogénération comprenant
- une chambre à combustion pour la combustion d'un porteur d'énergie,
- des moyens de production d'électricité pour générer de l'énergie électrique à partir d'énergie thermique libérée lors de la combustion du porteur d'énergie,
- un système de récupération de la chaleur perdue (200) agencé pour transformer de la chaleur perdue en énergie électrique, tandis que le système de récupération de la chaleur perdue (200) comprend au moins un moteur à piston rotatif (100) et un générateur (110), tandis que le moteur à piston rotatif (100) peut être actionné à l'aide de la chaleur perdue et est couplé au générateur (110), pour générer de l'énergie électrique avec le générateur (110) lors de la rotation du moteur à piston rotatif (100),
- tandis que le moteur à piston rotatif (100) présente un boîtier (10) formant un espace interne (11), dans lequel au moins deux pistons rotatifs (20, 30) sont agencés de telle sorte qu'ils tournent ensemble, lorsqu'un fluide afflue dans l'espace interne (11),
- tandis que chaque piston rotatif (20, 30) comprend au moins deux baguettes d'étanchéité (25, 26, 35, 36) et au moins deux cavités (27, 28, 37, 38) sur sa circonférence externe, tandis que les formes des cavités (27, 28, 37, 38) et des baguettes d'étanchéité (25, 26, 35, 36) sont choisies pour insérer les baguettes d'étanchéité (25, 26, 35, 36) de chacun des pistons rotatifs (20, 30) dans les cavités (27, 28, 37, 38) de chacun des autres pistons rotatifs (20, 30),
- tandis que les baguettes d'étanchéité (25, 26, 35, 36) sont dimensionnées pour être en contact étanche avec une paroi interne du boîtier (12),
- tandis que les baguettes d'étanchéité (25, 26, 35, 36) comprennent un matériau déformable, de sorte qu'elles peuvent être pressées contre la paroi interne du boîtier (12) par le fluide.

2. Centrale de cogénération selon la revendication 1,
**caractérisée en ce que**
le système de récupération de la chaleur perdue (200) comprend un processus cyclique, en particulier un cycle de Rankine organique, avec un système de conduite (160) pour la circulation du fluide et un échangeur de chaleur (150) pour transférer la chaleur perdue sur le fluide, tandis que le moteur à piston rotatif (100) est agencé dans le système de conduite (160), pour qu'il puisse être traversé par le fluide.

3. Centrale de cogénération telle que définie à la revendication 1 ou 2,
**caractérisée en ce que**
les moyens de production d'énergie électrique comprennent, pour générer de l'énergie électrique, un générateur, qui est le même générateur (110) que celui qui est couplé avec le moteur à piston rotatif (100).

4. Centrale de cogénération selon une des revendications 1 à 3,
**caractérisée en ce que**
chacune des baguettes d'étanchéité (25, 26, 35, 36) présente, dans une position rotationnelle du piston rotatif respectif (20, 30), pour laquelle cette baguette d'étanchéité (25, 26, 35, 36) est en contact avec la paroi interne du boîtier (12), une surface de contact fluidique (35A), laquelle fait face à un fluide entrant,
et
la surface de contact fluidique (35A) a une forme concave.

5. Centrale de cogénération selon une des revendications 1 à 4,
**caractérisée en ce que**
chacune des baguettes d'étanchéité (25, 26, 35, 36) présente une face arrière (35B) située en face de la surface de contact fluidique (35A) et qui ne fait pas face à du fluide entant, dans une position rotationnelle du piston rotatif correspondant (20, 30), pour laquelle cette baguette d'étanchéité (25, 26, 35, 36) est en contact avec la surface interne du boîtier (12), et
la face arrière (35B) a une forme convexe.

6. Centrale de cogénération selon une des revendications 1 à 5,
**caractérisée en ce que**
les pistons rotatifs (20, 30) présentent, sur chacune de leurs circonférences externes des encoches pour recevoir et maintenir les baguettes d'étanchéité (25, 26, 35, 36) et
les baguettes d'étanchéité (25, 26, 35, 36) sont formées en tant que galets à encoche pour une pénétration sûre dans les encoches de chaque piston rotatif (20, 30).

7. Centrale de cogénération selon une des revendications 1 à 6,
**caractérisée en ce que**
chacun des pistons rotatifs (20, 30) comprend exactement deux baguettes d'étanchéité (25, 26, 35, 36) à des positions d'angle opposées sur sa circonférence externe et
chaque piston rotatif (20, 30) comprend exactement deux encoches 27, 28, 37, 38), qui se trouvent à des positions d'angle sur la circonférence externe, qui sont chacune décalées de 90° par rapport aux positions d'angle des deux baguettes d'étanchéité (25, 26, 35, 36).

8. Centrale de cogénération selon une des revendications 1 à 7,
**caractérisée en ce que**
les baguettes d'étanchéité (25, 26, 35, 36) sont dimensionnées et une surface interne du boîtier (12) est formée de telle sorte que les baguettes d'étanchéité (25, 26, 35, 36) sont en contact étanche avec la surface interne du boîtier (12) dans une zone d'angle de rotation des pistons rotatifs (20, 30).

9. Centrale de cogénération selon une des revendications 1 à 8,
**caractérisée en ce que**
chacun des pistons rotatifs (20, 30) présente, sur sa circonférence externe, une couronne dentée (23, 33) et
les pistons rotatifs (20, 30) sont agencés de telle sorte que leurs couronnes dentées (23, 33) s'imbriquent les unes dans les autres.

10. Centrale de cogénération selon la revendication 9,
**caractérisée en ce que**
les baguettes d'étanchéité (25, 26, 35, 36) s'étendent, dans une direction radiale de chacun de leurs pistons rotatifs (20, 30), plus loin vers l'extérieur que chaque couronne dentée (23, 33).

11. Centrale de cogénération selon la revendication 9 ou 10,
**caractérisée en ce que**
les baguettes d'étanchéité (25, 26, 35, 36) dépassent chaque couronne dentée (23, 33) d'une distance radiale comprise entre 5 % et 30 %, en particulier entre 10 % et 25 %, d'un rayon de la couronne dentée (23, 33).

12. Centrale de cogénération selon une des revendications 9 à 11,
**caractérisée en ce que**
chacune des couronnes dentées (23, 33) est interrompue par les cavités (27, 28, 37, 38) et les encoches pour recevoir les baguettes d'étanchéité (25, 26, 35, 36) du piston rotatif (20, 30) correspondant et s'étend, pour le reste, sur toute la circonférence du piston rotatif (20, 30) correspondant.

13. Procédé pour le faire fonctionner une centrale de cogénération
- tandis qu'un porteur d'énergie est brûlé dans une chambre à combustion,
- tandis que de l'énergie électrique est générée avec des moyens de production d'énergie électrique à partie d'énergie thermique libérée par la combustion du porteur d'énergie,
- tandis que la chaleur perdue est transformée en énergie électrique avec un système de récupération de la chaleur perdue (200), tandis que le système de récupération de la chaleur perdue (200) comprend au moins un moteur à piston rotatif (100) et un générateur (110),
- tandis que le moteur à piston rotatif (100) est actionné à l'aide de la chaleur perdue et est couplé au générateur (110), tandis que de l'énergie électrique est générée par le générateur (110) lors de la rotation du moteur à piston rotatif (100),
- tandis que le moteur à piston rotatif (100) présente un boîtier (10) qui forme un espace intérieur (11), dans lequel au moins deux pistons rotatifs (20, 30) sont agencés de sorte à ce qu'ils tournent ensemble, lorsqu'un fluide afflue dans l'espace interne (11),
tandis que chaque piston rotatif (20, 30) comprend au moins deux baguettes d'étanchéité (25, 26, 35, 36) et au moins deux cavités (27, 28, 37, 38) sur sa circonférence externe, tandis que les formes des cavités (27, 28, 37, 38) et des baguettes d'étanchéité (25, 26, 35, 36) sont choisies de sorte que les baguettes d'étanchéité (25, 26, 35, 36) de chacun des pistons rotatifs (20, 30) pénètrent dans les cavités (27, 28, 37, 38) de chacun des autres pistons rotatifs (20, 30),
- tandis que les baguettes d'étanchéité (25, 26, 35, 36) sont en contact étanche avec une surface interne du boîtier (12) dans une direction radiale,
- tandis que les baguettes d'étanchéité (25, 26, 35, 36) comprennent un matériau déformable de sorte qu'elles sont pressées de manière étanche par le fluide contre la surface interne du boîtier (12).
